# FASCICULE DE BREVET EUROPEEN

(11) **EP 2 179 917 B1**
(45) Date de publication et mention de la délivrance du brevet: **17.08.2011**
(21) Numéro de dépôt: 09176973.7
(22) Date de dépôt: 25.06.2003
(51) Int. Cl.: B63H 9/06, B29C 51/28, B29C 51/14, B29C 70/44

(54) **Toiles formées et renforcées**
Geformten und verstärkten Bahnen
Reinforced, formed fabrics

(30) Priorité: 02.07.2002 CH 11502002
(43) Date de publication de la demande: 28.04.2010
(62) Demande divisionnaire de: 03729773.6
(73) Titulaire: Createx S.A., 1110 Morges (CH)
(72) Inventeur: Gautier, Gerard, 1137, Yens (CH); Kessi, Edouard, 1162, St-Prex (CH)
(74) Mandataire: Lawrence, John

(56) Documents cités:
- US-A- 6 106 649

## Description

La présente invention se rapporte à un procédé de fabrication de toiles formées et renforcées, et plus particulièrement à un procédé de fabrication de toiles formées et renforcées en continu alterné, la toile étant constituée par des éléments composites qui sont constitués par une membrane, étanche par exemple, qui enrobe des éléments de renforcement, des fils par exemple, les éléments constituant la toile pouvant être formés en trois dimensions de manière à ce que la toile présente une forme désirée en trois dimensions.

Les toiles renforcées et formées sont utilisées dans tous les cas où une toile doit être renforcée d'une manière générale et en particulier lorsqu'une toile doit être renforcée selon des directions particulières qui sont déterminées par les efforts qui agissent sur la toile. A titre d'exemple lorsqu'une toile fortement sollicitée par des efforts comporte des oeillets de fixation à l'endroit de ses angles ou ailleurs, des renforcements peuvent être nécessaires pour diffuser les efforts, maintenir la forme et éviter des déchirures. De plus, si des efforts importants agissent entre l'un ou l'autre des oeillets des renforcements peuvent être nécessaires dans la direction des efforts.

Dans de nombreux cas, il est nécessaire que la toile présente des formes particulières en trois dimensions que ce soit pour des raisons de performances ou pour des raisons esthétique.

La fabrication de toiles de haute performance, renforcées et formées est soumise à plusieurs paramètres dont bien entendu les critères commerciaux qui impliquent qu'une toile doit être performante, aussi légère que possible et bien entendu d'un prix aussi bas que possible.

De nombreuses formes d'exécution de toiles renforcées et formées et de fabrication de toiles renforcées et formées sont connues mais elles présentent toutes de nombreux inconvénients.

Un inconvénient essentiel de toutes les toiles renforcées et formées de haute performance connues est que la structure de la toile est constituée par un assemblage d'éléments du type sandwich, c'est-à-dire que la toile est constituée au minimum de trois composants qui sont les éléments de renforcement qui sont assemblés par collage en sandwich entre deux feuilles de plastique polymérisé tel que décrit dans le WO-A-0020312 par exemple. Ce type de construction de toile est coûteux et d'un poids assez élevé. Les feuilles de plastique polymérisé sont semi-rigides et ne peuvent pas permettre des déformations locales. La forme d'ensemble de la toile doit permettre d'obtenir une forme voulue sur l'ensemble de la dimension de la toile ce qui nécessite par conséquent des moules à la dimension totale de la voile qui sont très coûteux. Ces procédés de fabrication avec moules à dimension globale présente plusieurs inconvénients dont un des plus importants est le coût qui se reporte inévitablement sur le produit fini. Un autre inconvénient est l'encombrement de ces moules qui nécessitent de très grands locaux de production. De plus, le coût important des outillages implique un manque de flexibilité lorsque des changements de formes sont nécessaires ce qui retarde et rend les phases de développement très coûteuses. Les fils de renforcement étant généralement posés chacun d'une seule pièce avec ces formes d'exécution, le positionnement est très délicat.

D'autres formes d'exécution connues sont réalisées par l'assemblage de plusieurs panneaux de toile de découpes différentes, les panneaux étant assemblés entre eux par des coutures ou par collage. L'endroit des coutures est fragile et nécessite des panneaux de renforcement eux-mêmes rapportés par des coutures. Les efforts soumis à la toile sont donc dépendants de la résistance des coutures à ces endroits ce qui, comme dit, présente l'inconvénient de nécessiter des panneaux de renforcement qui contribuent à augmenter le poids d'ensemble de la toile. De plus, aux endroits des coutures et des panneaux de renforcement la toile est moins souple que les autres panneaux de la toile, ce qui provoque de nombreuses plissures et de la fatigue des matériaux lorsque la toile prend la forme voulue ce qui est inesthétique et ce qui peut réduire les performances de la toile pour certaines formes d'utilisation.

Les buts de la présente invention consistent donc à remédier aux inconvénients précités des formes d'exécution connues.

Les buts sont atteints selon les principes de l'invention tels que décrits dans la revendication 1.

Le procédé de fabrication de toiles formées et renforcées, selon les principes de l'invention, consiste à procéder à la fabrication de la toile en continu. Une presse de faible largeur par rapport à la longueur de la toile presse successivement les éléments constituants de la toile. Des éléments de renforcement, des fils par exemple, sont préparés sur un tapis qui est disposé déplaçable sur une table de préparation et des éléments de renforcement discontinus sont disposés en chevauchant la partie en attente de la toile déjà pressée. Les éléments de renforcement peuvent ainsi être disposés dans toutes les directions selon la direction et l'importance des efforts qui sont soumis à la toile. Les cuves supérieure et inférieure de la presse comportent des dispositifs déplaçables et réglables qui permettent de procurer lors du pressage une forme en trois dimensions voulue à des endroits voulus. Par avancements successifs de la toile et selon les réglages la toile peut présenter des portions plates ou présenter des portions en trois dimensions, la forme des portions en trois dimensions peut être variée rapidement selon la forme finale prévue pour la toile. Les élément qui constituent la toile sont-composés de fils qui sont enrobés d'une membrane qui est constituée par de la résine. Ces éléments se présentent avant pressage sous formes de bandes qui peuvent être constituées par un préimprégné de résine et de fils, la préimprégnation présentant l'avantage de maintenir les fils. Une fois pressé, la toile est constituée par la membrane qui est la résine qui enrobe les fils ou plutôt les filaments des fils. En effet les fils sont constitués par des milliers de filaments qui se répartissent sur la largeur de chaque bande. Lors de la préparation une partie de chaque bande est posée sur les bandes juxtaposées et lors du pressage les filaments des différentes bandes s'entremêlent entre eux de manière à constituer une toile homogène et étanche par exemple.

Les avantages des principes de l'invention sont nombreux. Un des avantages importants est que la toile une fois terminée est constituée, en coupe, par deux éléments qui sont la membrane et les filaments de renforcements, et en conséquence le procédé de fabrication permet de réduire les éléments en comparaison avec les formes d'exécutions connues à trois couches. Cette réduction du nombre d'éléments permet d'obtenir une réduction du poids et du coût.

Le fait que la toile terminée se présente sous forme d'une membrane enrobant des milliers de filaments entremêlés permet d'obtenir une toile très homogène, sans plissure et avec des renforcements qui permettent de résister à tous les efforts qui peuvent être soumis à la toile. La membrane et les filaments présentent encore l'avantage d'être pratiquement indéformables dans le sens des efforts tout en étant très souples lors du pliage de la toile par exemple.

La presse présente un très faible encombrement par rapport aux dimensions de toiles à fabriquer ce qui permet de l'installer dans des locaux de faibles dimensions.

Le dispositif de formage intégré à la presse qui permet d'obtenir des portions de toile en trois dimensions, ce qui permet d'obtenir une toile finie en trois dimensions, présente de nombreux avantages. Un de ces avantages est que le dispositif de formage permet de supprimer les outillages coûteux tels que les moules ou outillages à trois dimensions. En effet, le dispositif de formage peut permettre d'obtenir une multitude de formes différentes par de simples et très rapides réglages. Cet avantage est très important lors de la fabrication mais il est aussi très important lors du développement de nouvelles toiles présentant de nouvelles formes, le dispositif de réglage permettant d'obtenir très rapidement une nouvelle forme par de simples et rapides réglages.

Selon un aspect, l'invention comprend un procédé de fabrication de toiles formées et renforcées, dans lequel la toile comprend une membrane qui enrobe des éléments de renforcement, le procédé comprenant les étapes consistant à : fournir une presse qui comprend une cuve supérieure dont la partie inférieure est constituée par un élément souple et une cuve inférieure dont la partie supérieure est constituée par un élément souple, la cuve supérieure comprenant une latte de formage dont la forme peut être réglée par des tiges de réglage et dont la forme réglée provoque la déformation élastique en trois dimensions des éléments souples et par conséquent de la membrane et des éléments de renforcement qui sont dans la presse, dans lequel la latte de formage comporte une position active dans laquelle la latte de formage déforme la membrane et les éléments de renforcement, et une position inactive dans laquelle la latte de formage est inactive et il n'y a aucune déformation de la membrane et des éléments de renforcement, préparer des parties de membrane et d'éléments de renforcement avant le pressage sur une courroie de transport qui est placée sur une table de préparation qui place alors ces parties sous la presse qui fournit une pression et un chauffage, et les parties de la membrane et des éléments de renforcement se chevauchent au cours de la préparation afin de constituer à la sortie de la presse une toile homogène qui comprend des parties plates et des parties formées en trois dimensions selon de multiples formes déterminées par le réglage de la latte de formage au cours du pressage de chaque partie de membrane et d'éléments de renforcement dont la longueur est déterminée par la largeur de la presse et de la table de préparation.

La cuve supérieure de la presse peut être remplie avec de l'air dont la pression est réglable et contrôlée par un manomètre, la pression de pressage étant fournie par l'air comprimé contenu dans la cuve supérieure.

La cuve inférieure peut être remplie avec de l'eau dont le niveau est maintenu par le principe des vases communicants essentiellement grâce au raccordement de l'alimentation en eau et de la sortie qui est raccordée à un réservoir, et dont la pression est maintenue au cours du pressage par la fermeture de la vanne.

La polymérisation ou l'activation de la résine constituant la membrane peut être obtenue en chauffant la table de préparation.

L'activation de la résine peut être obtenue en chauffant la table de préparation et la polymérisation peut être obtenue en chauffant l'une ou l'autre des cuves.

L'activation ou la polymérisation de la résine peut être obtenue en chauffant la presse.

Les parties de la membrane et des éléments de renforcement peuvent être placées pour se chevaucher partiellement afin de garantir l'homogénéité de la toile.

Les parties de la membrane et des éléments de renforcement peuvent être disposées dans toutes les directions et également les unes sur les autres par croisement selon la direction des forces auxquelles la toile est soumise et selon les emplacements où la toile doit comprendre des renforcements particuliers.

Un élément pour immobiliser la toile peut être activé au cours du pressage.

Selon un autre aspect de l'invention, un procédé de fabrication d'une voile comprenant des éléments de renforcement et une résine comprend les étapes consistant à former les éléments de renforcement et la résine en bandes ; à positionner les bandes sur une surface, dans lequel les bandes sont positionnées pour se chevaucher partiellement ; à former au moins une partie des bandes en une forme tridimensionnelle, en fournissant une presse comportant une cuve supérieure avec un élément inférieur élastiquement souple et une cuve inférieure avec un élément supérieur élastiquement souple ; à transférer les bandes positionnées à partir de la surface et à positionner les bandes entre, et en contact avec, l'élément supérieur souple élastiquement et l'élément inférieur souple élastiquement ; à déformer au moins une partie de l'élément supérieur souple et au moins une partie de l'élément inférieur souple en une forme tridimensionnelle, déformant ainsi la partie des bandes en contact avec la partie de l'élément supérieur souple et la partie de l'élément inférieur souple en une forme tridimensionnelle ; à appliquer une pression et de la chaleur sur les bandes ; à activer et polymériser la résine pour enrober les éléments de renforcement, formant ainsi la toile.

Les éléments de renforcement peuvent comprendre des filaments, et les filaments peuvent être distribués dans la bande entière.

L'étape consistant à positionner peut comprendre l'étape consistant à fournir une ou plusieurs bandes supplémentaires le long d'au moins une partie d'une ligne prévue de force à laquelle la toile sera soumise. L'étape consistant à positionner peut comprendre l'étape consistant à fournir une ou plusieurs bandes supplémentaires dans un emplacement où la toile nécessitera un renforcement.

Selon un autre aspect, l'invention comprend un procédé de fabrication de toiles formées et renforcées comprenant des éléments de renforcement et une résine, le procédé comprenant les étapes consistant à positionner les éléments de renforcement et la résine sur une surface, dans lequel les éléments de renforcement et la résine sont en contact les uns avec les autres ; à former au moins une partie des éléments de renforcement et au moins une partie de la résine en une forme tridimensionnelle ; à appliquer une pression et de la chaleur sur les éléments de renforcement et la résine ; à activer et polymériser la résine pour enrober les éléments de renforcement, formant ainsi la toile, et à retirer la toile de la surface.

L'étape consistant à positionner peut comprendre les étapes consistant à : former les éléments de renforcement et la résine en bandes ; et positionner les bandes sur la surface. L'étape consistant à former peut être réalisée de façon sensiblement simultanée à l'étape consistant à appliquer une pression et de la chaleur. L'étape consistant à former peut comprendre les -étapes consistant à fournir une presse comportant une cuve supérieure avec un élément inférieur souple élastiquement et une cuve inférieure avec un élément supérieur souple élastiquement ; à positionner les éléments de renforcement et la résine entre, et en contact avec, l'élément supérieur souple élastiquement et l'élément inférieur souple élastiquement ; à déformer au moins une partie de l'élément supérieur souple et au moins une partie de l'élément inférieur souple en une forme tridimensionnelle, déformant ainsi la partie des éléments de renforcement et la partie de la résine en contact avec la partie de l'élément supérieur souple et la partie de l'élément inférieur souple en une forme tridimensionnelle. La cuve supérieure peut comprendre une latte de formage, et l'étape consistant à déformer peut comprendre les étapes consistant à : régler la forme de la latte de formage ; et mettre en contact l'élément inférieur souple avec la latte de formage réglée pour déformer la partie de l'élément inférieur souple, la partie de l'élément supérieur souple, la partie des éléments de renforcement, et la partie de la résine, en une forme tridimensionnelle. La surface peut comprendre une table de préparation. La table de préparation peut être séparée de la presse. L'étape consistant à activer la résine ou polymériser la résine peut comprendre l'étape consistant à chauffer la table de préparation.

La surface peut comprendre l'élément supérieur souple élastiquement de la cuve inférieure de la presse. L'étape consistant à activer la résine peut comprendre l'étape consistant à chauffer la table de préparation, et l'étape consistant à polymériser la résine peut comprendre l'étape consistant à chauffer la cuve supérieure ou chauffer la cuve inférieure. L'étape consistant à activer la résine ou polymériser la résine peut comprendre l'étape consistant à chauffer la presse.

L'étape consistant à positionner peut comprendre l'étape consistant à positionner les éléments de renforcement pour se chevaucher partiellement. L'étape consistant à positionner peut comprendre l'étape consistant à positionner au moins un élément de renforcement le long d'au moins une partie d'une ligne prévue de force à laquelle la toile sera soumise. L'étape consistant à positionner peut comprendre l'étape consistant à positionner au moins un élément de renforcement dans un emplacement où la toile nécessitera renforcement.

L'étape consistant à positionner peut comprendre l'étape consistant à positionner les bandes pour se chevaucher partiellement. L'étape consistant à positionner peut comprendre l'étape consistant à positionner au moins une bande le long d'au moins une partie d'une ligne prévue de force à laquelle la toile sera soumise.

L'étape consistant à positionner peut comprendre l'étape consistant à positionner au moins une bande dans un emplacement où la toile nécessitera un renforcement.

Les éléments de renforcement peuvent être imprégnés préalablement avec de la résine.

Les bandes peuvent comprendre des éléments de renforcement imprégnés préalablement avec de la résine.

L'étape consistant à positionner peut en outre comprendre l'étape consistant à positionner des bandes en contact avec au moins une partie d'une première toile comprenant un premier élément de renforcement et une première résine ; et le procédé peut en outre comprendre l'étape consistant à : joindre les bandes à la première toile en appliquant une pression et de la chaleur sur la première toile et les bandes qui sont en contact avec la première toile.

Les éléments de renforcement peuvent comprendre des filaments, et le procédé peut comprendre l'étape consistant à distribuer les filaments dans toute la toile.

L'élément de renforcement peut comprendre des filaments, et les filaments peuvent être distribués dans toutes les bandes.

La toile peut être formée essentiellement d'éléments de renforcement et de résine.

La toile peut être constituée essentiellement d'éléments de renforcement et de résine.

Selon un autre aspect, l'invention comprend un procédé de fabrication de toiles formées et renforcées comprenant des éléments de renforcement et une résine, le procédé comprenant les étapes consistant à positionner les éléments de renforcement et la résine sur une surface, dans lequel les éléments de renforcement et la résine sont en contact les uns avec les autres ; à former au moins une partie des éléments de renforcement et au moins une partie de la résine en une forme tridimensionnelle ; à appliquer une pression et de la chaleur sur les éléments de renforcement et la résine ; à activer et polymériser la résine pour enrober les éléments de renforcement, formant ainsi la toile, dans lequel la toile comprend une première surface et une seconde surface opposée, et dans lequel la première surface et la seconde surface sont dépourvues de feuille séparée de plastique polymérisé ; et à retirer la toile de la surface.

L'étape consistant à positionner peut comprendre l'étape consistant à stratifier des bandes, les unes sur les autres, pour fournir une pluralité de couches.

Le procédé peut en outre comprendre l'étape consistant à positionner les bandes d'une première couche selon des angles par rapport aux bandes d'une seconde couche. L'étape consistant à positionner peut comprendre l'étape consistant à positionner au moins certaines des bandes pour se chevaucher sensiblement le long d'une longueur de chaque bande.

L'étape consistant à positionner peut comprendre l'étape consistant à positionner au moins certaines des bandes en parallèle, de sorte qu'une première extrémité d'une bande chevauche sensiblement une première extrémité d'une seconde bande.

Selon un autre aspect, l'invention comprend un procédé de fabrication d'une toile comprenant les étapes consistant à sélectionner une pluralité d'éléments de renforcement, dans lequel les éléments de renforcement sont formés de filaments qui sont alignés en forme de bande ; à agencer les éléments de renforcement pour former une bande ; à fournir une résine en contact avec les éléments de renforcement ; à positionner les bandes de sorte qu'au moins certaines des bandes chevauchent partiellement des bandes adjacentes ; et à activer la résine pour enrober les éléments de renforcement, formant ainsi la toile.

L'étape consistant à positionner peut comprendre l'étape consistant à positionner au moins une bande supplémentaire le long d'au moins une partie d'une ligne prévue de force à laquelle la toile sera soumise. L'au moins une bande supplémentaire peut être positionnée de façon sensiblement parallèle aux lignes prévues de force. L'au moins une bande supplémentaire peut être positionnée de façon sensiblement perpendiculaire aux lignes prévues de force. L'au moins une bande supplémentaire peut être positionnée de façon sensiblement parallèle et au moins une bande supplémentaire peut être positionnée de façon sensiblement perpendiculaire aux lignes prévues de force. L'étape consistant à positionner peut comprendre l'étape consistant à positionner au moins une bande supplémentaire dans un emplacement où la toile nécessitera un renforcement.

Les bandes peuvent comprendre des éléments de renforcement imprégnés préalablement avec de la résine.

Selon un autre aspect, l'invention comprend un procédé de fabrication d'une toile formée comprenant les étapes consistant à : sélectionner une pluralité d'éléments de renforcement, dans lequel les éléments de renforcement sont formés de filaments qui sont alignés en forme de bande ; agencer les éléments de renforcement pour former une bande ; fournir une résine en contact avec les éléments de renforcement ; agencer les bandes de sorte qu'au moins certaines des bandes chevauchent partiellement des bandes adjacentes ; placer les bandes agencées sur une surface composant une forme tridimensionnelle ; et activer la résine pour enrober les éléments de renforcement, formant ainsi la toile formée.

L'étape consistant à positionner peut comprendre l'étape consistant à positionner au moins une bande supplémentaire le long d'au moins une partie d'une ligne prévue de force à laquelle la toile sera soumise. L'au moins une bande supplémentaire peut être positionnée de façon sensiblement paralléle aux lignes prévues de force. Au moins une bande supplémentaire peut être positionnée de façon sensiblement perpendiculaire aux lignes prévues de force. Au moins une bande supplémentaire peut être positionnée de façon sensiblement parallèle et au moins une bande supplémentaire peut être positionnée de façon sensiblement perpendiculaire aux lignes prévues de force. L'étape consistant à positionner peut comprendre l'étape consistant à positionner au moins une bande supplémentaire dans un emplacement où la toile nécessitera un renforcement.

Les bandes peuvent comprendre des éléments de renforcement imprégnés préalablement avec de la résine.

Selon un autre aspect, l'invention comprend un procédé de fabrication d'une toile formée comprenant les étapes consistant à : sélectionner une pluralité d'éléments de renforcement, dans lequel les éléments de renforcement sont formés de filaments qui sont alignés en forme de bande ; fournir une résine en contact avec les éléments de renforcement ; agencer les éléments de renforcement pour former une bande ; agencer les bandes sur une surface comportant une forme tridimensionnelle de sorte qu'au moins certaines des bandes chevauchent partiellement des bandes adjacentes ; et activer la résine pour enrober les éléments de renforcement, formant ainsi la toile formée.

L'étape consistant à positionner peut comprendre l'étape consistant à positionner au moins une bande supplémentaire le long d'au moins une partie d'une ligne prévue de force à laquelle la toile sera soumise. Au moins une bande supplémentaire peut être positionnée de façon sensiblement parallèle aux lignes prévues de force. Au moins une bande supplémentaire peut être positionnée de façon sensiblement perpendiculaire aux lignes prévues de force. L'au moins une bande supplémentaires peut être positionnée de façon sensiblement parallèle et au moins une bande supplémentaire peut être positionnée de façon sensiblement perpendiculaire aux lignes prévues de force. L'étape consistant à positionner peut comprendre l'étape consistant à positionner au moins une bande supplémentaire dans un emplacement où la toile nécessitera un renforcement.

Les bandes peuvent comprendre des éléments de renforcement imprégnés préalablement avec de la résine.

L'étape consistant à positionner les bandes peut comprendre l'étape consistant à stratifier des bandes, les unes sur les autres, pour fournir une pluralité de couches. Le procédé peut en outre comprendre l'étape consistant à positionner les bandes d'une première couche selon des angles par rapport aux bandes d'une seconde couche.

L'étape consistant à positionner les bandes peut comprendre l'étape consistant à positionner au moins certaines des bandes pour se chevaucher sensiblement le long d'une longueur de chaque bande. L'étape consistant à positionner peut comprendre l'étape consistant à positionner au moins certaines des bandes en parallèle, de sorte qu'une première extrémité d'une bande chevauche sensiblement une première extrémité d'une seconde bande. L'étape consistant à agencer les bandes peut comprendre l'étape consistant à stratifier des bandes, les unes sur les autres, pour fournir une pluralité de couches. Le procédé peut en outre comprendre l'étape consistant à positionner les bandes d'une première couche selon des angles par rapport aux bandes d'une seconde couche.

L'étape consistant à agencer les bandes peut comprendre l'étape consistant à positionner au moins certaines des bandes pour se chevaucher sensiblement le long d'une longueur de chaque bande. L'étape consistant à agencer les bandes peut comprendre l'étape consistant à positionner au moins certaines des bandes en parallèle, de sorte qu'une première extrémité d'une bande chevauche sensiblement une première extrémité d'une seconde bande. L'étape consistant à agencer les bandes peut comprendre l'étape consistant à stratifier des bandes, les unes sur les autres, pour fournir une pluralité de couches. Le procédé peut en outre comprendre l'étape consistant à positionner les bandes d'une première couche selon des angles par rapport aux bandes d'une seconde couche.

L'étape consistant à agencer les bandes peut comprendre l'étape consistant à positionner au moins certaines des bandes pour se chevaucher sensiblement le long d'une longueur de chaque bande. L'étape consistant à agencer les bandes peut comprendre l'étape consistant à positionner au moins certaines des bandes en parallèle, de sorte qu'une première extrémité d'une bande chevauche sensiblement une première extrémité d'une seconde bande.

Selon un autre aspect, l'invention comprend une toile formée comprenant : des éléments de renforcement comprenant des filaments ; et une résine activée et polymérisée enrobant les filaments; la toile comprend une première surface et une seconde surface opposée, et la première surface et la seconde surface sont dépourvues de feuille séparée de plastique polymérisé.

Des éléments de renforcement supplémentaires peuvent être présents le long de lignes prévues de force à laquelle la toile sera soumise.

Des éléments de renforcement supplémentaires peuvent être présents dans une région de la toile qui est prévue pour être soumise à des forces plus importantes.

Les éléments de renforcement supplémentaires peuvent être positionnés de façon sensiblement paralléle aux lignes prévues de force. Les éléments de renforcement supplémentaires peuvent être positionnés de façon sensiblement perpendiculaire aux lignes prévus de force.

Les éléments de renforcement supplémentaires peuvent être positionnés de façon sensiblement parallèle et de façon sensiblement perpendiculaire aux lignes prévues de force.

La toile peut être formée essentieliment d'éléments de renforcement et de résine.

Selon un autre aspect, l'invention comprend une toile constituée essentiellement d'éléments de renforcement comprenant des filaments ; et d'une résine activée et polymérisée enrobant les filaments.

Selon un autre aspect, l'invention comprend une voile comprenant une toile renforcée, la toile renforcée comprenant des éléments de renforcement comprenant des filaments ; et une résine activée et polymérisée enrobant les filaments ; la toile comprend une première surface et une seconde surface opposée, et la première surface et la seconde surface sont dépourvues de feuille séparée de plastique polymérisé.

Des éléments de renforcement supplémentaires peuvent être présents le long de lignes prévues de force à laquelle la voile sera soumise. Des éléments de renforcement supplémentaires peuvent être présents dans une région de la voile qui est prévue pour être soumise à des forces plus importantes. Les éléments de renforcement supplémentaires peuvent être positionnés de façon sensiblement parallèle aux lignes prévues de force. Les éléments de renforcement supplémentaires peuvent être positionnés de façon sensiblement perpendiculaire aux lignes prévues de force. Les éléments de renforcement supplémentaires peuvent être positionnés de façon sensiblement parallèle et de façon sensiblement perpendiculaire aux lignes prévues de force.

La toile peut être formée essentiellement d'éléments de renforcement et de résine.

Selon un autre aspect, l'invention comprend une voile comprenant une toile renforcée, la toile renforcée étant constituée essentiellement de : éléments de renforcement comprenant des filaments ; et une résine activée et polymérisée enrobant les filaments.

Selon un autre aspect, l'invention comprend une toile comprenant : une pluralité de bandes, chacune des bandes étant formée d'une pluralité d'éléments de renforcement sensiblement parallèles, chacun des éléments de renforcement sensiblement parallèles comprenant des filaments sensiblement parallèles ; et une résine activée enrobant les filaments pour former une toile ; au moins certaines de la pluralité de bandes chevauchent partiellement des bandes adjacentes.

La toile peut comprendre une première surface et une seconde surface opposée, et la première surface et la seconde surface sont dépourvues de feuille séparée de plastique polymérisé.

Au moins une bande supplémentaire peut être présente le long de lignes prévues de force à laquelle la toile sera soumise. Au moins une bande supplémentaire peut être présente dans une région de la toile qui est prévue pour être soumise à des forces plus importantes. Au moins une bande supplémentaire peut être positionnée de façon sensiblement parallèle aux lignes prévues de force. Au moins une bande supplémentaire peut être positionnée de façon sensiblement perpendiculaire aux lignes prévues de force.

Au moins une bande supplémentaire peut être positionnée de façon sensiblement parallèle et au moins une bande supplémentaire est positionnée de façon sensiblement perpendiculaire aux lignes prévues de force.

Selon un autre aspect, l'invention comprend une toile pour fabriquer une voile, comprenant une pluralité de bandes, chacune des bandes étant formée d'une pluralité d'éléments de renforcement sensiblement parallèles, chacun des éléments de renforcement sensiblement parallèles comprenant des filaments sensiblement parallèles ; et une résine activée enrobant les filaments pour former une toile ; au moins certaines de la pluralité de bandes chevauchent partiellement des bandes adjacentes et les bandes sont agencées pour contenir les forces prévues dans la voile.

Au moins une bande supplémentaire peut être présente le long de lignes prévues de force à laquelle la toile sera soumise. Au moins une bande supplémentaire peut être présente dans une région de la toile qui est prévue pour être soumise à des forces plus importantes. Au moins une bande supplémentaire peut être positionnée de façon sensiblement parallèle aux lignes prévues de force. Au moins une bande supplémentaire peut être positionnée de façon sensiblement perpendiculaire aux lignes prévues de force. Au moins une bande supplémentaire peut être positionnée de façon sensiblement parallèle et au moins une bande supplémentaire est positionnée de façon sensiblement perpendiculaire aux lignes prévues de force.

Selon un autre aspect, l'invention comprend une toile formée comprenant une plurality de bandes, chacune des bandes étant formée d'une pluralité d'éléments de renforcement sensiblement parallèles, chacun des éléments de renforcement sensiblement parallèles comprenant des filaments sensiblement parallèles ; et une résine activée enrobant les filaments pour former une toile ; au moins certaines de la pluralité de bandes chevauchent partiellement des bandes adjacentes, et les filaments sont orientés de façon tridimensionnelle prédéterminée pour former une toile formée.

La toile peut comprendre une première surface et une seconde surface opposée, et la première surface et la seconde surface sont dépourvues de feuille séparée de plastique polymérisé. Au moins une bande supplémentaire peut être présente le long de lignes prévues de force à laquelle la toile sera soumise. Au moins une bande supplémentaire peut être présente dans une région de la toile qui est prévue pour être soumise à des forces plus importantes. Au moins une bande supplémentaire peut être positionnée de façon sensiblement parallèle aux lignes prévues de force. Au moins une bande supplémentaire peut être positionnée de façon sensiblement perpendiculaire aux lignes prévues de force. Au moins une bande supplémentaire peut être positionnée de façon sensiblement parallèle et au moins une bande supplémentaire peut être positionnée de façon sensiblement perpendiculaire aux lignes prévues de force.

Selon un autre aspect, l'invention comprend une toile formée pour fabriquer une voile, comprenant une pluralité de bandes, chacune des bandes étant formée d'une pluralité d'éléments de renforcement sensiblement parallèles, chacun des éléments de renforcement sensiblement parallèles comprenant des filaments sensiblement parallèles ; et une résine activée enrobant les filaments pour former une toile ; au moins certaines de la pluralité de bandes chevauchent partiellement des bandes adjacentes et les bandes sont agencées de façon tridimensionnelle prédéterminée pour contenir les forces prévues dans la voile.

Selon un autre aspect, l'invention comprend une voile comprenant une pluralité de bandes, chacune des bandes étant formée d'une pluralité d'éléments de renforcement sensiblement parallèles, chacun des éléments de renforcement sensiblement parallètes comprenant des filaments sensiblement parallèles ; et une résine activée enrobant les filaments pour former une toile ; au moins certaines de la pluralité de bandes chevauchent partiellement des bandes adjacentes et les bandes sont agencées pour contenir les forces prévues dans la voile.

Selon un autre aspect, l'invention comprend une voile comprenant une pluralité de bandes, chacune des bandes étant formée d'une pluralité d'éléments de renforcement sensiblement parallèles, chacun des éléments de renforcement sensiblement parallèles comprenant des filaments sensiblement parallèles ; et une résine activée enrobant les filaments pour former une toile ; au moins certaines de la pluralité de bandes chevauchent partiellement des bandes adjacentes et les bandes sont agencées de façon tridimensionnelle prédéterminée pour contenir les forces prévues dans la voile.

Les bandes peuvent être stratifiées les unes sur les autres pour fournir une pluralité de couches. Les bandes d'une première couche peuvent s'étendre selon des angles par rapport aux bandes d'une seconde couche. Au moins certaines des bandes peuvent se chevaucher sensiblement le long d'une longueur de chaque bande. Au moins certaines des bandes peuvent être positionnées en parallèle, de sorte qu'une première extrémité d'une bande chevauche sensiblement une première extrémité d'une seconde bande. Les bandes peuvent être stratifiées les unes sur les autres pour fournir une pluralité de couches. Les bandes d'une première couche peuvent être disposées selon des angles par rapport aux bandes d'une seconde couche.

Au moins certaines des bandes peuvent se chevaucher sensiblement le long d'une longueur de chaque bande.

Au moins certaines des bandes peuvent être positionnées en parallèle, de sorte qu'une première extrémité d'une bande chevauche sensiblement une première extrémité d'une seconde bande.

Selon un aspect, l'invention comprend un procédé de fabrication de toiles formées et renforcées, caractérisé par le fait qu'il consiste à fabriquer une toile constituée d'une membrane qui enrobe des éléments de renforcement en continu alterné dans une presse qui comporte une cuve supérieure dont la partie inférieure est constituée par un élément souple et une cuve inférieure dont la partie supérieure est constituée par un élément souple, la cuve supérieure comportant une latte de formage dont la forme peut être réglée par des tiges de réglages et dont la forme de réglage provoque la déformation élastique en trois dimensions des éléments souples et par conséquent de la membrane et des éléments de renforcement qui se trouvent dans la presse, en une position active dans laquelle la latte présente une forme et dans une position non active dans laquelle la latte de formage est non active et ne provoque aucune déformation de la membrane et des éléments de renforcement qui sont pressés à plat, par le fait que les portions de membrane et d'éléments de renforcement sont préparés avant pressage sur une bande de transport qui est posée sur une table de préparation qui ensuite place ces portions sous la presse avec pression et chauffage, et par le fait que les portions de membrane et d'éléments de renforcement sont chevauchés lors de la préparation de manière à constituer à la sortie de la presse une toile homogène qui comporte des portions plates et des portions formées en trois dimensions selon des formes multiples déterminée par le réglage de la latte de formage lors du pressage de chaque portion de membrane et d'éléments de renforcement dont la longueur est déterminée par la largeur de la presse et de la table de préparation.

De manière optimale, la cuve supérieure de la presse est remplie d'air dont la pression est réglable et contrôlée par un manomètre, la pression de pressage étant fournie par l'air comprimé contenu dans la cuve supérieure.

De manière optimale, la cuve inférieure est remplie d'eau dont le niveau est maintenu par le principe des vases communicants par liaison de l'amenée et sortie d'eau qui est reliée à un réservoir, et dont la pression est maintenue lors du pressage par la fermeture de la vanne.

De manière optimale, la polymérisation ou l'activation de la résine constituant la membrane est obtenue par chauffage de la table de préparation.

De manière optimale, l'activation de la résine est obtenu par chauffage, de la table de préparation et que la polymérisation est obtenue par le chauffage d'une ou l'autre des cuves.

De manière optimale, l'activation ou la polymérisation de la résine est obtenue par le chauffage de la presse.

De manière optimale, les portions de membrane et d'éléments de renforcement sont posées en se chevauchant partiellement entre eux de manière à garantir l'homogénéité de la toile.

De manière optimale, les portions de membrane et d'éléments de renforcement peuvent être disposées dans toutes les directions et aussi l'un sur l'autre par croisement selon la direction des efforts subis par la toile et selon les endroits où la toile doit comporter des renforcements particuliers.

De manière optimale, qu'un élément de blocage de la toile est activé lors du pressage.

Les principes de l'invention permettent de réduire considérablement les coûts de fabrication tout en permettant d'obtenir des toiles plus performantes.

Les figures annexées illustrent schématiquement et à titre d'exemple les principes de l'invention.
La figure 1 est une vue d'ensemble de côté de la presse et des différents éléments annexés à la presse.
La figure 2 est une vue de face de la presse avec le dispositif de formage.
La figure 3 est vue d'ensemble de côté de la presse avec le dispositif de formage en position de formage.
La figure 4 est une vue de face de la presse avec le dispositif de formage en position de formage.
La figure 5 est une vue de la presse avec un dispositif de chauffage à infra-rouge.
La figure 6 est une vue en coupe d'une membrane enrobant des fils disposés d'une manière uni-directionnelle.
La figure 7 est une vue en coupe d'une membrane enrobant des fils disposés d'une manière multi-directionnelle.
La figure 8 est une vue en plan de bandes avant pressage. La figure 9 est en vue en plan d'une toile avec des bandes disposées en différentes directions.
La figure 10 est une vue en coupe de portions de toile formées en trois dimensions.
La figure 11 est une vue en coupe de côté d'une toile dépliée.

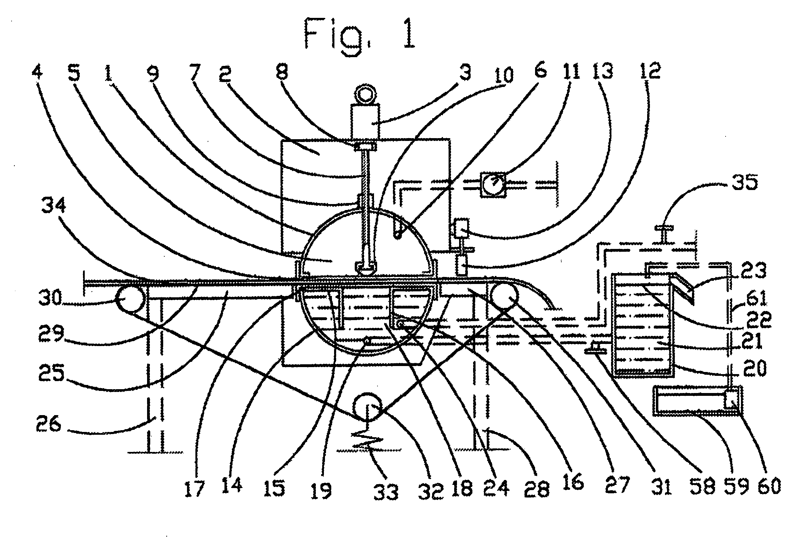

En référence tout d'abord à la figure 1, une presse est constituée par une cuve supérieure 1 et une cuve inférieure 14. La cuve inférieure 14 comporte des cornières en forme de L 15 et 16. La partie supérieure de la cuve inférieure 14 comporte un élément souple 17 (une membrane en silicone par exemple) qui est monté d'une manière hermétique sur la cuve inférieure 14. La cuve inférieure 14 est remplie d'eau 18 qui est amenée par une entrée d'eau 24. L'entrée d'eau est contrôlée par une vanne 35. La cuve inférieure comporte une sortie d'eau 19 qui est une sortie d'équilibrage. La sortie d'eau 19 est reliée par un conduit à un réservoir 20 qui contient de l'eau 21. Le réservoir comporte un déversoir d'eau 23 qui détermine la hauteur du niveau d'eau 22. La hauteur du niveau d'eau 22 est prévue pour se trouver au niveau de la face inférieure de l'élément souple 17. Le niveau d'eau dans la cuve inférieure est ainsi contrôlé par le principe des vases communicants. Une vanne 58 est montée entre la sortie d'eau 19 et le réservoir 20. La fermeture de la vanne 58 permet de bloquer la circulation d'eau et d'annuler le principe des vases communicants. Un réservoir d'équilibrage 59 est placé sous le déversoir 23. Lorsque de l'eau se déverse par le déversoir 23 dans le réservoir d'équilibrage 59, le surplus d'eau dans le réservoir d'équilibrage est constamment ramené dans le réservoir 20 par un conduit 61 qui est relié à une pompe 60. La cuve supérieure 1 est fermée dans sa partie inférieure par un élément souple 4 qui est monté d'une manière hermétique à la cuve supérieure. La cuve supérieure contient de l'air 5 qui est amené par une entrée d'air 6. La pression de l'air est contrôlée par un manomètre 11. La cuve supérieure 1 comporte des éléments de renforcement 2. Une poutre métallique 3 est montée sur les éléments de renforcement, le tout étant assemblé par soudure par exemple. La poutre métallique 3 est reliée à un vérin ou à n'importe quel dispositif mécanique permettant d'une part de soulever la cuve lors des opérations de préparation ou d'appliquer une pression vers le bas lors de l'opération de pressage. Une tige filetée 7 qui comporte un écrou d'actionnement 8 coopère avec un élément taraudé 9 qui est monté sur la cuve supérieure. L'extrémité inférieure de la tige est reliée avec jeux à une latte de formage 10. Une table de préparation 25 est montée sur des pieds 26 et une table de réception 27 est montée sur des pieds 28. Une bande de transport 29 est montée déplaçable sur les tables et sur l'élément souple 17 de la cuve inférieure 14. La bande de transport est maintenue par deux rouleaux fixes 30 et 31 et par un rouleau déplaçable 32 qui est soumis à l'action d'un ressort de traction 33 qui règle la tension de la bande de 'transport 29 en fonction des déformations de celle-ci. Les bandes renforcées, 34 qui constituent la toile une fois les pressages effectués sont préparés sur la bande de transport, passent ensuite sous la presse et sortent sous forme d'une toile constituée par une membrane qui enrobe des filaments.

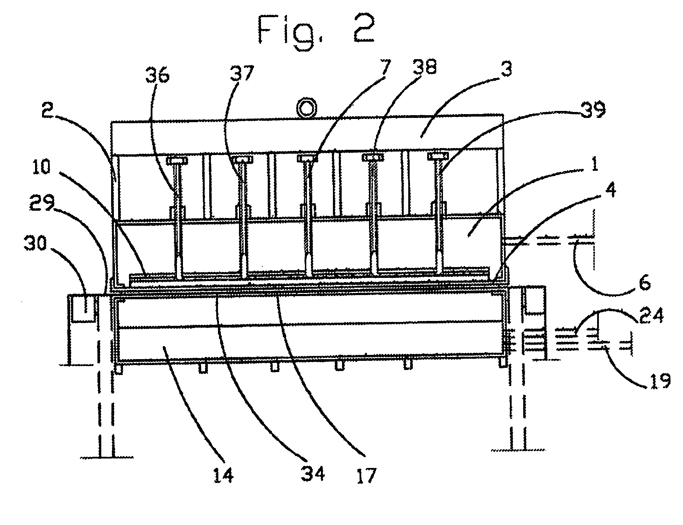

La figure 2 montre en vue de face les tiges filetées 36, 37, 7, 38, 39, qui sont reliées dans leur partie inférieure à la latte de formage 10. La latte de formage n'est pas fixée aux tiges dans son sens longitudinal, mais elle est montée déplaçable de manière à ce que lorsque la latte de formage est déformée les tensions sur elle puissent être absorbées. La figure 2 montre la poutre métallique 3, la cuve supérieure 1 dans laquelle la latte de formage est installée et les éléments de renforcement 2 de la cuve supérieure, les éléments souples 4 et 17, l'entrée d'eau 24, la sortie d'eau 19 d'équilibrage, l'entrée d'air 6, la cuve inférieure 14, la bande de transport 29 et le rouleau 30 et les bandes renforcées 34.

La position montrée sur les figures 1 et 2 est la position de pressage à plat dans laquelle la latte de formage est en position non active. Dans cette position l'eau de la cuve inférieure est maintenue à niveau par le principe des vases communicants et ensuite la vanne 58 est fermée, et l'air contenu dans la cuve supérieure est mis sous pression, à une valeur de pression qui est déterminée par la nature de la résine des bandes renforcées.

Lors du pressage la résine doit être chauffée ou activée à une température déterminée par la nature de la résine. Plusieurs possibilités de chauffage peuvent être prévues selon la figure 1. Une possibilité est le chauffage de l'air contenu dans la cuve supérieure. Une possibilité est le chauffage de l'eau contenue dans la cuve inférieure. Une possibilité est le chauffage de la table de préparation juste avant que les bandes renforcées soient déplacées sous la presse.

Pour le cas où le chauffage n'est pas obtenu par la table de préparation cette table est de toute manière chauffée à une certaine température nécessaire à une légère adhésion des bandes renforcées pour faciliter la pose de ces bandes.

La figure 1 montre un élément de blocage 12 qui est actionné par un vérin de blocage 13. Dans la position de déplacement de la bande de transport l'élément de blocage est inactif.

Dans la pratique les premières bandes renforcées sont disposées sur la table de préparation. Une fois la pose des bandes renforcées effectuée, la bande de transport place ces premières bandes renforcées sous la presse, la cuve supérieure est déplacé vers la base jusqu'à contact avec pression sur la cuve inférieure, par chauffage et par la pression d'air de la cuve supérieure les bandes renforcées se transforment en une membrane enrobant des filaments, le tout constituant une toile étanche ou non étanche. Une ou les deux cuves sont refroidies, refroidissant ainsi la membrane. Le déplacement des bandes renforcées par la bande de transport laisse une portion des bandes sur la table de préparation pour le raccordement avec la deuxième série de bandes renforcées. Lors du temps de pressage des premières bandes renforcées, les deuxièmes bandes sont disposées sur la table de préparation est lorsque l'opération de pressage des premières bandes renforcées est accomplie la pression d'air est remise à la pression ambiante, la cuve supérieure est soulevée et les deuxièmes bandes renforcées sont placées sous la presse. Le temps de fabrication d'une toile est déterminée par le temps nécessaire au chauffage des bandes renforcées et au refroidissement. A titre d'exemple, selon les résines utilisées le temps de pressage peut se limiter à quelques minutes qui sont de toute manière nécessaires pour la disposition des bandes de renforcement suivantes.

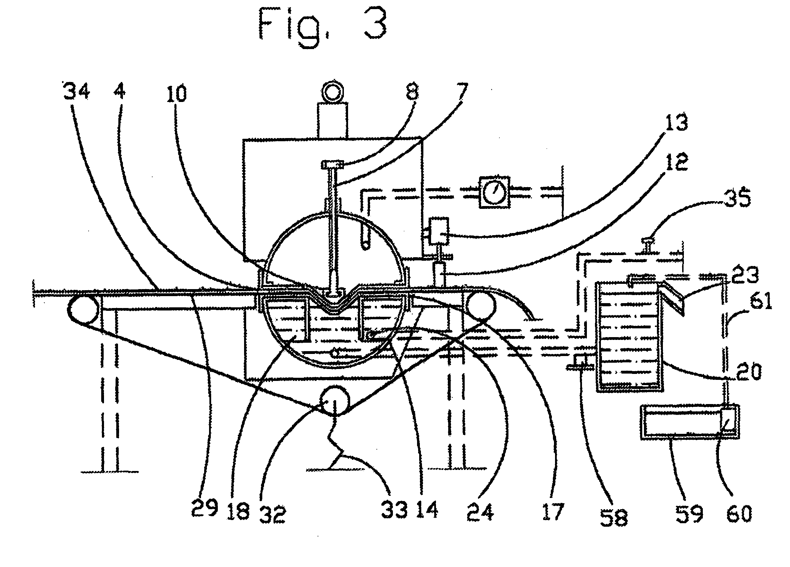

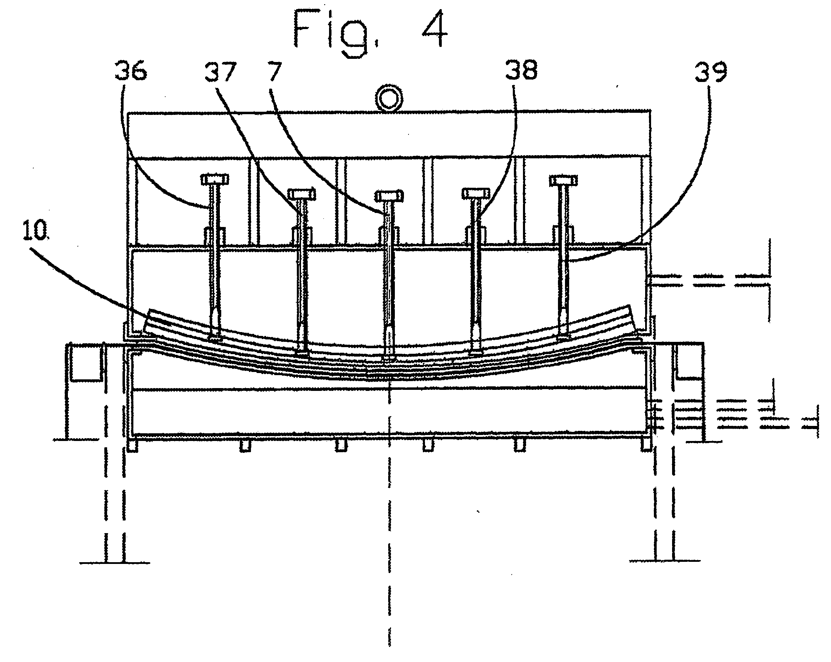

Les figures 3 et 4 montrent le pressage d'une portion de bandes renforcées avec formage en trois dimensions. Dans ce cas, lorsque les bandes renforcées 34 sont installées sous la presse les tiges 36, 37, 7, 38, 39, sont actionnées, par exemple avec l'aide d'écrous tel que l'écrou 8 de manière à donner une forme d'arc à la latte 10. L'élément de blocage 12 est actionné par le vérin de blocage 13 et bloque la portion de toile déjà terminée. De cette manière, les fils des bandes renforcées peuvent prendre la forme prévue, donc la différence de longueur résultant de la troisième dimension. Lors du pressage avec formage les éléments 'souples 4 et 17 et la bande transport 29 prennent également la forme choisie. Le rouleau déplaçable 32 se déplace vers le haut en maintenant la tension .de la bande de transport par le ressort 33. La position de forme, donc le déplacement de la latte de formage 10 vers le bas réduit le volume de la cuve inférieure 14 et l'eau 18 en trop peut sortir par la sortie d'eau qui passe dans le réservoir 20 et qui se déverse par le déversoir 23. La vanne 58 est fermée bloquant la quantité d'eau dans la cuve 14, et l'air 5 est mis sous pression.

Lorsque le pressage est terminé, la latte de formage est replacée en position non active, la vanne 58 est ouverte, l'eau est remise à niveau par la pompe 60 qui ramène l'eau excédentaire contenue dans le réservoir d'équilibrage 59 jusque dans le réservoir 20 par le conduit 61 Les autres opérations de pressage sont identiques aux opérations de pressage à plat.

Dans la pratique et dans le but d'obtenir la forme voulue en trois dimensions de toile finie, des portions de la toile sont pressées à plat, d'autres avec diverses formes de la latte de formage.

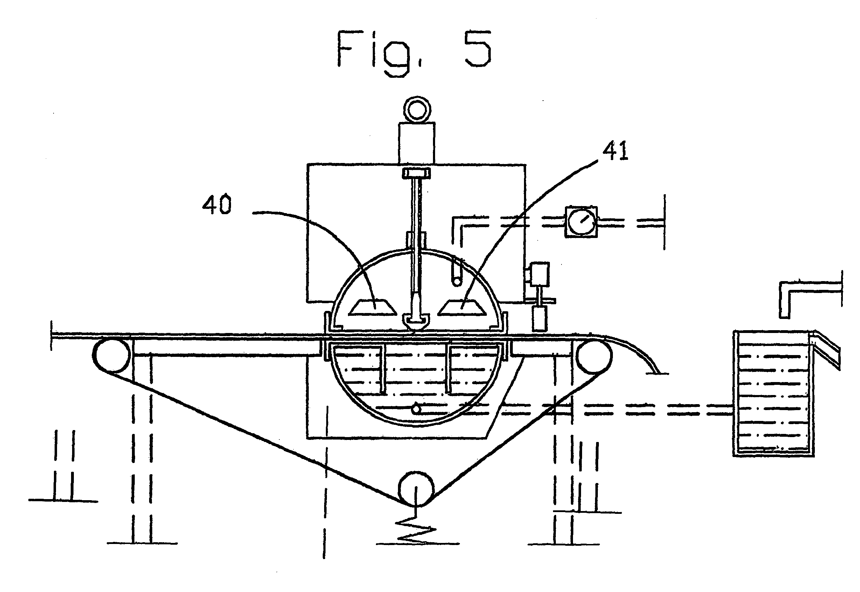

La figure 5 montre une autre possibilité de chauffage avec des éléments de chauffage à infra-rouge 40 et 41 qui sont disposés dans la cuve supérieure.

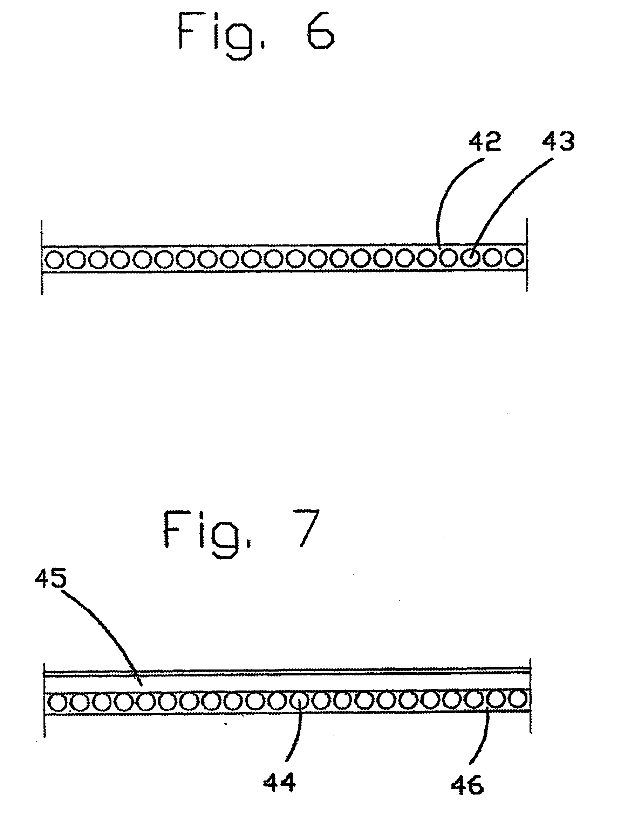

La figure 6 montre une portion de toile avec la membrane 42 qui enrobe les fils 43 disposés d'une manière unidirectionnelle. Dans la pratique et après pressage, les fils sont en fait constitués par des milliers de filaments.

La figure 7 montre une portion de toile avec la membrane 46 enrobant des fils de chaînes 44 et des fils de trames 45 d'une manière multi-directionnelle.

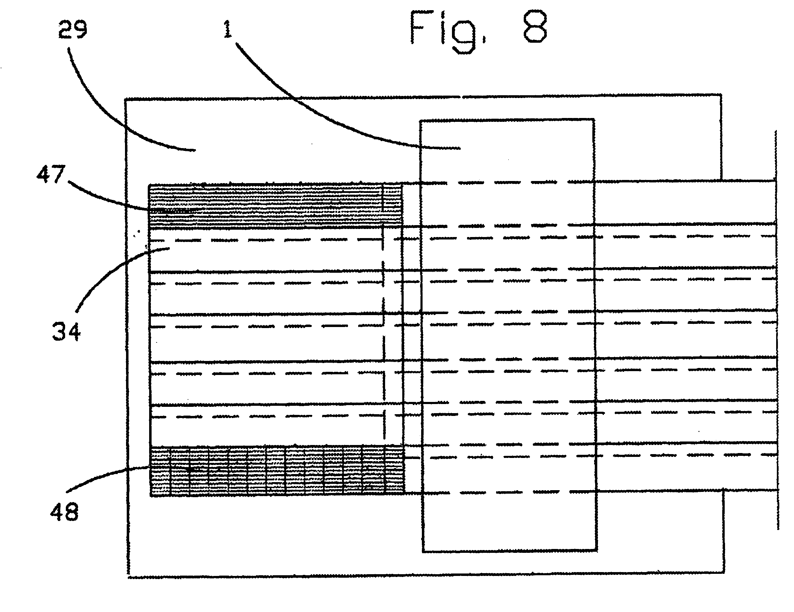

La figure 8 montre en vue en plan les bandes renforcées 34 qui sont disposées sur la bande de transport 29 qui est posée sur la table de préparation avec passage sous la presse représentée sur cette figure par la cuve supérieure 1. La figure 8 montre des différentes sortent de bandes renforcées 47 uni-directionnelle ou 48 bi-directionnelle qui peuvent être utilisées à titre d'exemple.

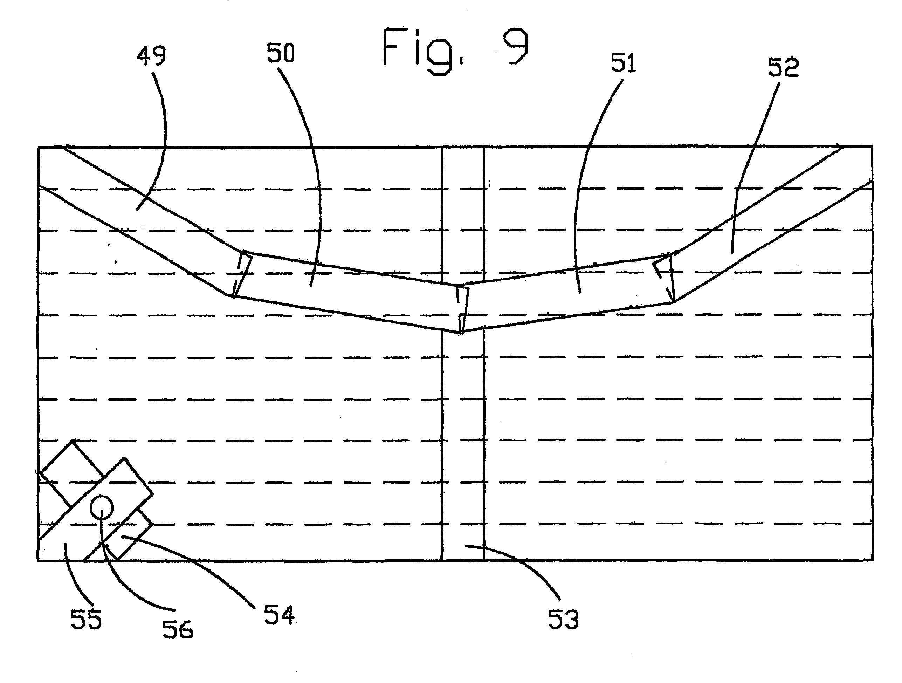

La figure 9 est une vue en plan d'une toile qui montre quelques exemples de possibilités de disposition de bandes renforcées, soit les bandes renforcées 49, 50, 51, 52, qui permettent d'obtenir une résistance selon un arc. La bande 53 qui présente un renforcement à 90°, ou des bandes 55 et 54 qui peuvent être disposées à l'endroit d'un oeillet 56 par exemple.

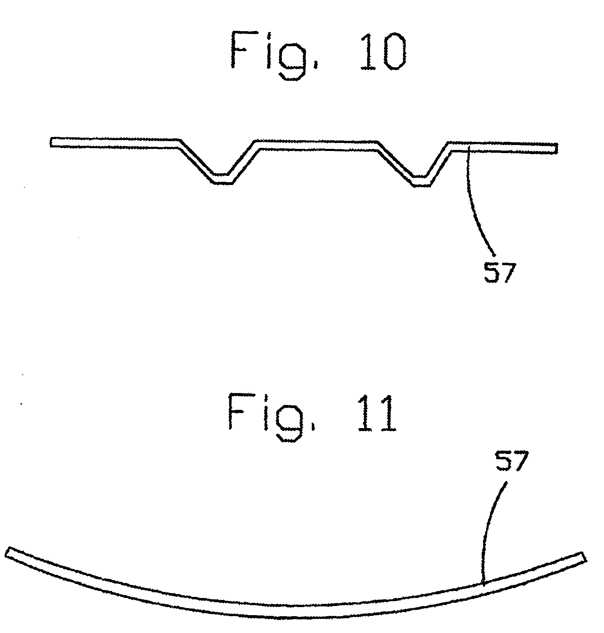

La figure 10 montre une vue en coupe d'une toile avec des portions déformées en trois dimensions selon la figure 4 en position non tenue.

La figure 11 montre la forme à trois dimensions que prend la toile lorsqu'elle est tendue.

Les différents éléments d'actionnement, les tiges filetées, les déplacements de la cuve supérieure, l'avance de la bande de transport, l'élément de blocage, l'ouverture et la fermeture de des amenées et sorties d'eau, l'enclenchement et le déclenchement du chauffage, la pression de l'air, peuvent être obtenus par des moteurs électriques, pas-à-pas par exemple, des vérins, des vannes ou des commandes éléctriques. Chacun de ces éléments peut être connecté à un ordinateur dont le programme gère l'actionnement. Il est également possible de disposer les bandes renforcées par un dispositif de transport et de placement qui peut également être géré par le programme informatique.

De cette manière, la fabrication de la toile peut être complètement automatique.

L'utilisation des toiles en trois dimensions est multiple, et ces toiles peuvent être utilisées dans tous les cas nécessitant des toiles légères, très résistantes et à trois dimensions.

## Revendications

1. Toile, comprenant :
une pluralité de bandes, chacune des bandes étant formée d'une pluralité d'éléments de renforcement sensiblement parallèles, chacun des éléments de renforcement sensiblement parallèles comprenant des filaments sensiblement parallèles ; et
une résine activée enrobant les filaments pour former une toile ;
dans laquelle au moins certaines de la pluralité de bandes chevauchent partiellement des bandes adjacentes.

2. Toile selon la revendication 1, dans laquelle la toile comprend une première surface et une seconde surface opposée, et dans laquelle la première surface et la seconde surface sont dépourvues de feuille séparée de plastique polymérisé.

3. Toile selon la revendication 2, ou toile selon la revendication 8, dans laquelle au moins une bande supplémentaire est présente le long de lignes prévues de force à laquelle la toile sera soumise.

4. Toile selon la revendication 3, ou toile selon la revendication 8, ou toile selon la revendication 10, dans laquelle au moins une bande supplémentaire est présente dans une région de la toile qui est prévue pour être soumise à des forces plus importantes.

5. Toile selon la revendication 3, lorsqu'elle dépend de la revendication 2 ou de la revendication 8, ou de la revendication 11, dans laquelle au moins une bande supplémentaire est positionnée de façon sensiblement parallèle aux lignes prévues de force.

6. Toile selon la revendication 3, lorsqu'elle dépend de la revendication 2, ou de la revendication 8, ou de la revendication 11, dans laquelle au moins une bande supplémentaire est positionnée de façon sensiblement perpendiculaire aux lignes prévues de force.

7. Toile selon la revendication 3, lorsqu'elle dépend de la revendication 2, ou de la revendication 8, ou de la revendication 11, dans laquelle au moins une bande supplémentaire est positionnée de façon sensiblement parallèle et au moins une bande supplémentaire est positionnée de façon sensiblement perpendiculaire aux lignes prévues de force.

8. Toile selon la revendication 1 pour fabriquer une voile, dans laquelle les bandes sont agencées pour contenir les forces prévues dans la voile.

9. Toile selon la revendication 1 dans laquelle la toile est formée, dans laquelle les filaments sont orientés de façon tridimensionnelle prédéterminée pour former la toile formée.

10. Toile formée selon la revendication 9 dans laquelle la toile comprend une première surface et une seconde surface opposée, et dans laquelle la première surface et la seconde surface sont dépourvues de feuille séparée de plastique polymérisé.

11. Toile selon la revendication 10, dans laquelle au moins une bande supplémentaire est présente le long de lignes prévues de force à laquelle la toile sera soumise.

12. Toile selon la revendication 1 dans laquelle la toile est formée pour fabriquer une voile, et dans laquelle les bandes sont agencées de façon tridimensionnelle prédéterminée pour contenir les forces prévues dans la voile.

13. Voile, comprenant :
une pluralité de bandes, chacune des bandes étant formée d'une pluralité d'éléments de renforcement sensiblement parallèles, chacun des éléments de renforcement sensiblement parallèles comprenant des filaments sensiblement parallèles ; et
une résine activée enrobant les filaments pour former une toile ;
dans laquelle au moins certaines de la pluralité de bandes chevauchent partiellement des bandes adjacentes et dans laquelle les bandes sont agencées pour contenir les forces prévues dans la voile.

14. Voile selon la revendication 13 dans laquelle les bandes sont agencées de façon tridimensionnelle prédéterminée pour contenir les forces prévues dans la voile.

15. Toile selon la revendication 8, ou voile selon la revendication 13, dans laquelle les bandes sont stratifiées les unes par-dessus les autres pour fournir une pluralité de couches.

16. Toile selon la revendication 15 lorsqu'elle dépend de la revendication 8, ou voile selon la revendication 15 lorsqu'elle dépend de la revendication 13, dans laquelle les bandes d'une première couche sont disposées selon des angles par rapport aux bandes d'une seconde couche.

17. Toile selon la revendication 8, ou voile selon la revendication 13, dans laquelle au moins certaines des bandes se chevauchent sensiblement le long d'une longueur de chaque bande.

18. Toile selon la revendication 8, ou voile selon la revendication 13, dans laquelle au moins certaines des bandes sont positionnées en parallèle, de sorte qu'une première extrémité d'une bande chevauche sensiblement une première extrémité d'une seconde bande.

## Claims

1. A fabric comprising:
a plurality of strips, each of the strips being formed from a plurality of substantially parallel reinforcing elements, each of the substantially parallel reinforcing elements comprising substantially parallel filaments; and
an activated resin encasing the filaments to form a fabric;
wherein at least some of the plurality of strips partially overlap adjacent strips.

2. The fabric of claim 1, wherein the fabric comprises a first surface and an opposing second surface, and wherein both the first surface and the second surface are free of a separate polymerized plastic sheet.

3. The fabric of claim 2, or the fabric of claim 8, wherein at least one additional strip is present along predicted lines of force to which the fabric will be subjected.

4. The fabric of claim 3, or the fabric of claim 8, or the fabric of claim 10, wherein at least one additional strip is present in a region of the fabric that is predicted to be subject to higher forces.

5. The fabric of claim 3, as it depends from claim 2 or from claim 8, or from claim 11, wherein at least one additional strip is positioned substantially parallel to the predicted lines of force.

6. The fabric of claim 3, as it depends from claim 2, or from claim 8, or from claim 11, wherein at least one additional strip is positioned substantially perpendicular to the predicted lines of force.

7. The fabric of claim 3, as it depends from claim 2, or from claim 8, or from claim 11, wherein at least one additional strip is positioned substantially parallel and at least one additional strip is positioned substantially perpendicular to the predicted lines of force.

8. A fabric according to claim 1 for making a sail;
wherein the strips are arranged to accommodate the expected forces in the sail.

9. A fabric according to claim 1 in which the fabric is shaped wherein the filaments are oriented in a predetermined, three-dimensional fashion to form the shaped fabric.

10. The shaped fabric of claim 9, wherein the fabric comprises a first surface and an opposing second surface, and wherein both the first surface and the second surface are free of a separate polymerized plastic sheet.

11. The fabric of claim 10, wherein at least one additional strip is present along predicted lines of force to which the fabric will be subjected.

12. A fabric according to claim 1 in which the fabric is shaped fabric for making a sail and wherein the strips are arranged in a predetermined, three-dimensional fashion to accommodate the expected forces in the sail.

13. A sail, comprising:
a plurality of strips, each of the strips being formed from a plurality of substantially parallel reinforcing elements, each of the substantially parallel reinforcing elements comprising substantially parallel filaments; and
an activated resin encasing the filaments to form a fabric;
wherein at least some of the plurality of strips partially overlap adjacent strips and wherein the strips are arranged to accommodate the expected forces in the sail.

14. A sail, according to claim 13 and wherein the strips are arranged in a predetermined, three-dimensional fashion to accommodate the expected forces in the sail.

15. The fabric of claim 8, or the sail of claim 13, wherein the strips are layered, one on top of the other, to provide a plurality of layers.

16. The fabric of claim 15 as it depends from claim 8, or the sail of claim 15 as it depends from claim 13, wherein the strips of a first layer are at angles with the strips of a second layer.

17. The fabric of claim 8, or the sail of claim 13, wherein at least some of the strips overlap substantially along a length of each strip.

18. The fabric of claim 8, or the sail of claim 13, wherein at least some of the strips are positioned in parallel, such that a first end of one strip substantially overlaps a first end of a second strip.

## Patentansprüche

1. Tuch umfassend:
eine Vielzahl von Streifen, wobei ein jeder der Streifen von einer Vielzahl von im Wesentlichen parallelen Verstärkungselementen gebildet ist, wobei ein jedes der im Wesentlichen parallelen Verstärkungselemente im Wesentlichen parallele Filamente umfasst, sowie
ein aktiviertes Harz, das die Filamente umhüllt, um ein Tuch zu bilden,
wobei wenigstens einige der Vielzahl von Streifen benachbarte Streifen teilweise überlappen.

2. Tuch nach Anspruch 1, wobei das Tuch eine erste Fläche und eine gegenüberliegende zweite Fläche aufweist und wobei die erste Fläche und die zweite Fläche keine separate Folie aus polymerisiertem Kunststoff aufweisen.

3. Tuch nach Anspruch 2, oder Tuch nach Anspruch 8, wobei wenigstens ein zusätzlicher Streifen entlang vorgesehener Linien einer Kraft, welcher das Tuch ausgesetzt sein wird, vorhanden ist.

4. Tuch nach Anspruch 3, oder Tuch nach Anspruch 8, oder Tuch nach Anspruch 10, wobei wenigstens ein zusätzlicher Streifen in einem Bereich des Tuchs vorhanden ist, der vorgesehen ist, um größeren Kräften ausgesetzt zu werden.

5. Tuch nach Anspruch 3, wenn dieser von Anspruch 2 oder von Anspruch 8 oder von Anspruch 11 abhängig ist, wobei wenigstens ein zusätzlicher Streifen im Wesentlichen parallel zu den vorgesehenen Kraftlinien angeordnet ist.

6. Tuch nach Anspruch 3, wenn dieser von Anspruch 2 oder von Anspruch 8 oder von Anspruch 11 abhängig ist, wobei wenigstens ein zusätzlicher Streifen im Wesentlichen senkrecht zu den vorgesehenen Kraftlinien angeordnet ist.

7. Tuch nach Anspruch 3, wenn dieser von Anspruch 2 oder von Anspruch 8 oder von Anspruch 11 abhängig ist, wobei wenigstens ein zusätzlicher Streifen im Wesentlichen parallel und wenigstens ein zusätzlicher Streifen im Wesentlichen senkrecht zu den vorgesehenen Kraftlinien angeordnet ist.

8. Tuch nach Anspruch 1 für die Herstellung eines Segels, wobei die Streifen angeordnet sind, um die vorgesehenen Kräfte in dem Segel einzuschließen.

9. Tuch nach Anspruch 1, wobei das Tuch geformt ist, wobei die Filamente in vorbestimmter dreidimensionaler Weise ausgerichtet sind, um das geformte Tuch zu bilden.

10. Tuch geformt nach Anspruch 9, wobei das Tuch eine erste Fläche und eine gegenüberliegende zweite Fläche umfasst und wobei die erste Fläche und die zweite Fläche keine separate Folie aus polymerisiertem Kunststoff aufweisen.

11. Tuch nach Anspruch 10, wobei wenigstens ein zusätzlicher Streifen entlang vorgesehener Linien einer Kraft, der das Tuch ausgesetzt sein wird, vorhanden ist.

12. Tuch nach Anspruch 1, wobei das Tuch geformt ist, um ein Segel herzustellen, und wobei die Streifen auf vorbestimmte dreidimensionale Weise angeordnet sind, um die vorgesehenen Kräfte in dem Segel einzuschließen.

13. Segel umfassend:
eine Vielzahl von Streifen, wobei ein jeder der Streifen von einer Vielzahl von im Wesentlichen parallelen Verstärkungselementen gebildet ist, wobei ein jedes der im Wesentlichen parallelen Verstärkungselemente im Wesentlichen parallele Filamente umfasst, sowie
ein aktiviertes Harz, das die Filamente umhüllt, um ein Tuch zu bilden,
wobei wenigstens einige der Vielzahl von Streifen benachbarte Streifen teilweise überlappen und wobei die Streifen angeordnet sind, um die vorgesehenen Kräfte in dem Segel einzuschließen.

14. Segel nach Anspruch 13, wobei die Streifen auf vorbestimmte dreidimensionale Weise angeordnet sind, um die vorgesehenen Kräfte in dem Segel einzuschließen.

15. Tuch nach Anspruch 8 oder Segel nach Anspruch 13, wobei die Streifen übereinander geschichtet sind, um eine Vielzahl von Lagen bereit zu stellen.

16. Tuch nach Anspruch 15, wenn dieser von Anspruch 8 abhängig ist, oder Segel nach Anspruch 15, wenn dieser von Anspruch 13 abhängig ist, wobei die Streifen einer ersten Lage in Winkeln gegenüber den Streifen einer zweiten Lage angeordnet sind.

17. Tuch nach Anspruch 8, oder Segel nach Anspruch 13, wobei wenigstens einige der Streifen sich im Wesentlichen entlang einer Länge jedes Streifens überlappen.

18. Tuch nach Anspruch 8, oder Segel nach Anspruch 13, wobei wenigstens einige der Streifen parallel angeordnet sind, so dass ein erstes Ende eines Streifens ein erstes Ende eines zweiten Streifens im Wesentlichen überlappt.
